# EUROPÄISCHE PATENTSCHRIFT

(11) **EP 0 572 794 B1**
(45) Veröffentlichungstag und Bekanntmachung des Hinweises auf die Patenterteilung: **10.01.1996**
(21) Anmeldenummer: 93106706.0
(22) Anmeldetag: 26.04.1993
(51) Int. Cl.: G05B 19/04

(54) **Sicherheitsabschaltsystem**
Safety cut-off system
Système de coupure de sécurité

(30) Priorität: 22.05.1992 CH 1660/92; 15.07.1992 CH 2257/92
(43) Veröffentlichungstag der Anmeldung: 08.12.1993
(73) Patentinhaber: Ferag AG, CH-8340 Hinwil (CH)
(72) Erfinder: Mäder, Carl Conrad, CH-8340 Hinwil (CH); Bovenzi, Giorgio, CH-8645 Jona (CH); Emmenegger, Robert, CH-6005 Luzern (CH)
(74) Vertreter: Patentanwälte Schaad, Balass & Partner AG

(56) Entgegenhaltungen:
- DE-A- 3 900 733
- DER POLYGRAPH Bd. 86, Nr. 17 , 5. September 1986 Seiten 1644 - 1650 'Innovative Steuerungssysteme für vollautomatisierte Drckmaschinen'
- DER POLYGRAPH Bd. 86, Nr. 17 , 5. September 1986 Seiten 1644 - 1650 'Innovative Steuerungssysteme für vollautomatisierte Druckmaschinen'

## Beschreibung

Die Erfindung betrifft ein Sicherheitsabschaltsystem der im Oberbegriff des Patentanspruchs 1 angegebenen Art.

Jede technische Einrichtung mit Energiezufuhr, welche bei Erfüllung ihres Einsatzauftrages eine Verletzungsgefahr ergibt, muß mit einer Notschalteinrichtung so schnell wie möglich in einen sicheren Zustand übergeführt werden können. Die Verletzungsgefahr kann direkt oder indirekt als Gefahr für das an der technischen Einrichtung tätige Personal oder für Drittpersonen auftreten. Entsprechend können Notschalteinrichtungen unterschiedlich ausgeführt sein, nämlich so, daß sie durch die Gefährdeten selbst oder durch Drittpersonen bewußt betätigt werden müssen, also z.B. in Form von Pilztastern, Schlagschaltern, Notausschaltern, oder so, daß sie im Gefahrenfalle durch die sich ergebende Körperbewegung des Gefährdeten automatisch betätigt werden, also z.B. in Form von Notzugleinen, Lichtschranken und dgl., oder durch überwachende Elemente der Maschinen selbst wie Überdruckventile und/oder Drehzahlüberwachunqseinrichtungen.

Den Maschinen ist daher jeweils ein eigener Abschaltkreis zugeordnet, auf den zumindest die genannte Notschalteinrichtung so einwirken kann, daß die Maschine sofort abgeschaltet wird. Unter dem Begriff "eigener Abschaltkreis" soll hier jede Art von maschineninterner Steuerung verstanden werden, auf die von außen manuell oder fernbetätigt eingewirkt werden kann, um die Maschine abzuschalten, was zumindest zur Folge haben muß, daß die Maschine oder ihre gefährlichen Teile stillgesetzt werden. Sobald das erfolgt ist, muß die Stromversorgung ihres Antriebes unterbrochen werden. Nach internationalen Sicherheitsrichtlinien hat das über zwangsgeführte mechanische Kontakte zu erfolgen. In der Maschinenabschaltebene beschränkt sich die Wirkung des jeder Maschine zugeordneten Abschaltkreises auf die zugeordnete Maschine selbst. Benachbarte Maschinen werden, wenn nötig, zwar gestoppt, jedoch nicht abgeschaltet.

Das gleichzeitige Abschalten von benachbarten oder anderen Maschinen erfolgt in der Bereichsabschaltebene. In dieser lassen sich Gruppen von räumlich oder technisch zusammengehörenden Maschinen sofort von der Stromversorgung trennen oder Maschinen oder Gruppen von räumlich oder technisch zusammengehörenden Maschinen elektrisch stillsetzen (bremsen) und danach von der Stromversorgung trennen. Unter "zusammengehörenden Maschinen" sind dabei Maschinen einer Anlage zu verstehen, die für ein Zusammenwirken konzipiert sind. Zu diesem Zweck werden im Stand der Technik die Maschinenabschaltebene und die dieser hierarchisch übergeordnete Bereichsabschaltebene kundenspezifisch festverdrahtet. Auf der Maschinenabschaltebene ist jede Maschine bereits von ihrem Hersteller her mit ihrem eigenen Abschaltkreis versehen. Für Gruppen von solchen Maschinen gibt es bislang keinen Standard, um diese auf der Bereichsabschaltebene zusammenfassen zu können. Dafür ist jedesmal eine neue Festverdrahtung erforderlich, die an Ort und Stelle hergestellt und nach der Fertigstellung vom Sicherheitsbeauftragten, der Behörde od. dgl. gesondert abgenommen werden muß. Damit nicht nur Maschinen oder Maschinenteile im Gefahrenfalle einfach abgeschaltet werden können, sondern Gruppen derselben, die aufgrund räumlicher oder technischer Zuordnung einen gemeinsamen Gefahrenbereich bilden, muß der gemeinsame Gefahrenbereich zunächst durch eine Gefahrenanalyse ermittelt werden. Anschließend werden alle Maschinen oder Maschinenteile einer Anlage, die zu diesem Bereich gehören, durch eine speziell zu erstellende Festverdrahtung zu einer Abschaltgruppe zusammengefaßt. Innerhalb der Gruppen gibt es wiederum Maschinen, die sofort abzuschalten sind, und mit rotierenden Massen verbundene Maschinen, die nach dem Abbremsen eine verzögerte Abschaltung verlangen. Dadurch wird die Verdrahtung weiter kompliziert. Ein weiterer Nachteil ist, daß bei jeder Änderung der Maschinenanlage, z.B. durch Hinzufügen von zusätzlichen Maschinen, auch die gesamte Verdrahtung geändert werden muß. Darüber hinaus ist diese Verdrahtung von Haus aus sehr aufwendig, weil Dutzende von Notschalteinrichtungen oder Notaustastern, die in einer Maschinenanlage verteilt sind, im Stand der Technik laut Sicherheitsvorschriften in Serie geschaltet sein müssen, damit bei Betätigung einer Notschalteinrichtung oder eines Notaustasters alle zugeordneten Maschinen einer Gruppe spannungsfrei geschaltet werden. Für dieses Spannnungsfreischalten verlangen die Vorschriften zwangsgeführte mechanische Kontakte.

Da im Stand der Technik im industriellen Bereich in einer Maschinenanlage jeder Maschine zur zuverlässigen überwachung und Steuerung getrennte Steuer-, Überwachungs- und Energieleitungen zugeordnet werden, was eine unübersichtliche Verkabelung ergibt, die schwierig zu warten und im Störungsfall schwierig zu reparieren ist, ist es bereits bekannt (DE 37 06 325 C2), die einzelnen Anlagenteile parallel an einen Bus anzuschalten und den einzelnen Anlagenteilen dazu Anschaltmodule zuzuordnen, wobei ein Leitrechner adressierte Telegramme über den Bus zu den einzelnen Anschaltmodulen überträgt. Beispiele für solche Anlagen sind Krananlagen, Fertigungsstraßen, Walzstraßen, Produktionslinien zur Weiterverarbeitung von Druckerzeugnissen, usw. Die einzelnen Anschaltmodule können dabei von außen durch den Leitrechner, durch die einzelnen Anschaltmodule selbst oder auch beispielsweise durch Notschalter in einen Nothaltzustand gebracht werden, indem Schaltschütze von Motoren, Transporteinrichtungen usw. zum Abfallen gebracht werden. Jede Eingangsschaltung der Anschaltmodule einschließlich des Busanschlusses wird zu diesem Zweck über spannungsfeste Optokoppler geführt. Weiter werden in den Anschaltmodulen Kriech- und Luftstrecken entsprechend den jeweiligen Vorschriften eingehalten. Bei diesem bekannten Steuer- und Datennetzwerk erfolgt die gruppenweise Zusammenfassung der Anschaltmodule aber allenfalls softwaremäßig im Leitrechner, so daß sich insofern die Forderung, daß die Sicherheitsabschaltung einer Gruppe vollständig über zwangsgeführte mechanische Kontakte erfolgt, nicht einhalten läßt.

Aus der DE-Zeitschrift "Der Polygraph", 17/1986, S.16144-16150, sind Steuerungssysteme für vollautomatisierte Druckmaschinen bekannt. Bei diesen ist eine Steueranlage in drei Ebenen gegliedert, eine Produktionsleitebene als übergeordnete Ebene, eine Leitstandebene als Gruppenleitebene einzelner Maschinensteuerungen sowie die Steuerungsebene mit der Maschinensteuerung auf Einzelleitebene. Auch eine solche Steueranlage wäre für eine Sicherheitsabschaltung nicht ohne weiteres geeignet, da die Produktionseinheiten über speicherprogrammierbare Steuerungen koordiniet sind, die Sicherheitsanforderungen aber zwangsgeführte mechanische Kontakte verlangen. Auch in eine solche Steueranlage müßte daher ein Sicherheitsabschaltsystem durch individuelle Festverdrahtung zusätzlich integriert werden, was mit den oben dargelegten Nachteilen verbunden wäre.

Der Einsatz von speicherprogrammierbarer Steuerungstechnik führt zwar zur Erzielung von maximaler Betriebssicherheit dank kontaktloser Technik (vgl. CH-Prospekt: WIFAG, Das zukunftsorientierte Steuerungssystem, 3/86, S.1-12, insbesondere S.3), er führt jedoch zu weiteren Erschwernissen bei dem Aufbau eines grundsätzlich erforderlichen Sicherheitsabschaltsystems, weil die Sicherheitsvorschriften, wie erwähnt, zwangsgeführten mechanische Kontakte verlangen.

Es sind zwar bereits Anstrengungen unternommen worden, zur Erhöhung der Betriebssicherheit in großen Walzwerksanlagen Sicherheitsschaltungen vorzusehen (vgl. BBC-Nachrichten, H.2/3, Jg.58, 1976, S.92-97, insbesondere S.95), als Anwendungsbeispiel dafür werden jedoch lediglich Not-Ausschaltschleifen in Aktiv-L-Technik, Stillsetzautomatik und Positionssteuerungen in zweikanaliger Ausführung mit Antivalenzüberwachung sowie dreikanalige Drehzahlregelung mit 2-aus-3-überwachung für einen Walzgerüstantrieb mit drei Motoren genannt, und es wird vorgeschlagen, bei einer Aufteilung der Leistung eines Antriebes auf mehrere, einzeln gespeiste Motoren bei vertretbarem Mehraufwand die Steuer- und Regelkreise so zu verknüpfen, daß beim Ausfall einer Speisung der ungestörte Teil des Antriebes vorübergehend mit erhöhter Last weitergefahren oder die Anlage mindestens noch geführt stillgesetzt werden kann. Die Probleme, wie sie durch individuell gestaltete und festverdrahtete Sicherheitsabschaltsysteme und insbesondere bei einer Vornahme von Änderungen in der mit dem Sicherheitsabschaltsystem versehenen Maschinenanlage verursacht werden, werden dabei nicht angesprochen und sind mit den angegebenen Maßnahmen auch nicht lösbar.

Aufgabe der Erfindung ist es, ein Sicherheitsabschaltsystem der im Oberbegriff des Patentanspruchs 1 angegebenen Art so zu verbessern, daß sich Bereiche, die aus Maschinen oder aus Gruppen von zusammengehörenden Maschinen bestehen, unter Einhaltung der Sicherheitsanforderungen zusammenfassen oder in ihrer Zusammensetzung bei der Erstellung einer Maschinenanlage oder nachträglich auf einfache Weise und mit geringstem Verdrahtungsaufwand ändern oder ergänzen und abschalten lassen.

Diese Aufgabe ist bei einem Sicherheitsabschaltsystem nach der Erfindung durch die im Patentanspruch 1 angegebenen Merkmale gelöst.

Das Sicherheitsabschaltsystem nach der Erfindung ist ein in sich geschlossenes und abgesondertes System, innerhalb welchem die Zuordnung von Maschinen zu Abschaltbereichen oder die Ergänzung oder Änderung von solchen Abschaltbereichen erfolgen kann, ohne daß die bereits vorhandene Verdrahtung einer Maschinenanlage geändert zu werden braucht. Die Erfindung ermöglicht das dadurch, daß alle Sicherheitsstromkreise der Maschinen über einen Hauptkasten für die zentrale Steuerung des Sicherheitsabschaltsystems geführt sind, in welchem eine mechanische Schaltmatrix vorgesehen ist, durch die Sicherheitsstromkreise beliebig miteinander verknüpfbar sind. Aus Maschinen oder aus Gruppen von zusammengehörenden Maschinen bestehende Abschaltbereiche können also innerhalb des Hauptkastens einfach durch Umstellen der mechanischen Schaltmatrix je nach räumlicher, technischer oder produktionstechnischer Hinsicht kundenspezifisch verknüpft werden, ohne daß in die bestehende Verdrahtung der Maschinen eingegriffen zu werden braucht. Die erforderliche Serienschaltung von Notschaltern und dgl. läßt sich auf einfache Weise in der Schaltmatrix vornehmen. Das vereinfacht die Gesamtverdrahtung der Maschinenanlage, da als Sicherheitsstromkreis für jede Maschine lediglich eine Steuerleitung zum Hauptkasten verlegt zu werden braucht, innerhalb welchem dann die einzelnen Steuerleitungen durch die Schaltmatrix miteinander verknüpft werden. Das Sicherheitsabschaltsystem nach der Erfindung, also die für die Sicherheit ausgelegten Anteile einer maschinellen Steuerung, lassen sich so auf einfache Weise vorteilhaft vom funktionalen Teil der Steuerung getrennt realisieren, so daß jede in einer Anlage betriebene Maschine bezüglich ihrer vorhandenen und meist durch die Behörde bereits abgenommenen Sicherheitseinrichtung keine Änderung zu erfahren braucht. Erfindungsgemäß wird also den individuellen Maschinenschutzeinrichtungen ein modular aufgebautes Sicherheitsabschaltsystem gleichsam überlagert und so der für die Sicherheit verantwortliche Teil einer maschinellen Steuerung vom funktionellen Teil strukturell weitgehend getrennt.

Es ist zwar bereits an sich bekannt (DE 39 00 733 C2), eine Kriech- und Drehbewegungsüberwachungseinrichtung so auszubilden, daß ohne Berücksichtigung der Spezifizierung einzelner Maschinenhersteller eine auf einem Grundgerät aufbauende, erweiterungsfähige Gesamtüberwachung mit normaler oder erhöhter Sicherheit möglich ist, und dabei einzelne Kriech- und Drehbewegungsüberwachungseinheiten mechanisch hintereinander zu schalten, so daß jedes Überwachungsmeßsystem jeder überwachungseinheit in der Lage ist, die Stromversorgungseinheit auszulösen und die Maschine insgesamt stillzusetzen. Dafür ist jedoch pro zu überwachender Maschine oder Maschinenanlage außer einem Grundgerät, das aus Stromversorgungseinheit und Kontrolleinheit besteht, je nach der Komplexität der Maschine eine entsprechende Anzahl von Überwachungseinheiten hinzuzufügen. Hier wird also der sonst erforderliche Verdrahtungsaufwand durch einen Aufwand an Überwachungseinheiten ersetzt.

Vorteilhafte Ausgestaltungen der Erfindung bilden die Gegenstände der Unteransprüche.

In einer Ausgestaltung der Erfindung ist sämtlichen Maschinen der Anlage wenigstens ein betätigbares auslösendes Element in einer der Bereichsabschaltebene übergeordneten Systemabschaltebene zugeordnet, das in einer Verbindung zwischen der Stromversorgung und dem Hauptkasten liegt und daher bei seiner Betätigung bewirkt, daß die der Stromversorgung zugeordnete Anlage zentral von der Stromversorgung getrennt wird. Bei akuter Personengefährdung oder einem gravierenden Anlagenfehler läßt sich so eine Abschaltung auslösen, bei der die der Stromversorgung zugeordnete Anlage systematisch stillgesetzt und zentral von der Stromversorgung getrennt wird.

In einer weiteren Ausgestaltung der Erfindung weist die Schaltmatrix eine Prioritätsmatrix und eine Zuweisungsmatrix auf, wobei die Zuweisungsmatrix aus Zeilen- und Spaltenleitungen besteht, die an ihren Kreuzungspunkten durch mechanische Schalter verbindbar sind, und wobei von den Zeilen- oder Spaltenleitungen die einen mit den Sicherheitsstromkreisen verbunden sind und die anderen mit Leitungen der Prioritätsmatrix verbunden und innerhalb derselben durch weitere mechanische Schalter miteinander und mit einem gemeinsamen Anschluß des Hauptkastens verbindbar sind. So läßt sich in der Schaltmatrix auf einfache Weise durch Einstellen von mechanischen Schaltern das Verknüpfen der Sicherheitsstromkreise nach gegenseitiger Zuweisung und nach Prioritäten erreichen.

In weiterer Ausgestaltung der Erfindung liegen die auslösenden Elemente der Bereichsabschaltebene in den Leitungen in der Prioritätsmatrix, und die weiteren mechanischen Schalter sind so angeordnet und ausgebildet, daß das Ende jeder folgenden Leitung in der Prioritätsmatrix mit der vorhergehenden Leitung wahlweise vor oder nach dem auslösenden Element in der vorhergehenden Leitung verbindbar ist. Einfach durch Einstellen der weiteren mechanischen Schalter läßt sich so auf einfache Weise festlegen, ob das auslösende Element, z.B. ein Bereichsabschalttaster, nur die mit ihm verbundene Spaltenleitung und die daran angeschlossene Sicherheitsstromkreise beeinflußt oder zusätzlich die mit weiteren Spaltenleitungen verbundenen Sicherheitsstromkreise.

In weiterer Ausgestaltung der Erfindung liegen die auslösenden Elemente der Bereichsabschaltebene jeweils in Reihenschaltung mit wenigstens einem Sicherheitselement in den Leitungen in der Prioritätsmatrix, und die weiteren mechanischen Schalter sind so angeordnet und ausgebildet, daß das Ende jeder folgenden Leitung in der Prioritätsmatrix mit der vorhergehenden Leitung wahlweise vor oder nach der Reihenschaltung oder mit der innerhalb der Reihenschaltung vorgesehenen Verbindung zwischen dem auslösenden Element und dem Sicherheitselement in der vorhergehenden Leitung verbindbar ist. Die vorgenannte weitere Ausgestaltung der Erfindung wird so auf ebenso einfache Weise auf Sicherheitselemente ausgedehnt, die in der Prioritätsmatrix mit den auslösenden Elementen in Reihe geschaltet sind.

In weiterer Ausgestaltung der Erfindung ist mit dem Hauptkasten ein Sicherungsautomatenschrank verbunden, in dem bei einer Abschaltung in der Systemabschaltebene die zentrale Trennung der Anlage von der Stromversorgung erfolgt. Beim Betätigen eines Systemabschalttasters werden sämtliche Maschinen durch Abschaltung im Sicherungsautomatenschrank von der Stromversorgung getrennt, wobei die Steuerung und überwachung dieses Abschaltvorganges (getrennt nach verzögert und unverzögert abzuschaltenden Maschinen) durch den Hauptkasten erfolgt.

In weiterer Ausgestaltung der Erfindung bestehen die elektrisch betätigbaren Schaltelemente in den Abschaltkreisen der Maschinen jeweils aus einer Relaiseinrichtung, die im Normalbetrieb vom Hauptkasten mit einer Spannung angesteuert wird und bei Unterbrechung dieser Spannung die Maschine abschaltet.

In noch weiterer Ausgestaltung der Erfindung handelt es sich bei jeder Relaiseinrichtung um eine redundante Relaiskombination. Die redundante Relaiskombination ist die Schnittstelle zwischen dem Hauptkasten und einer an das Sicherheitsabschaltsystem nach der Erfindung angeschlossenen Maschine. Die redundante Relaiskombination wird jeweils in die Maschine eingebaut und verdrahtet. Im Normalbetrieb wird die redundante Relaiskombination vom Hauptkasten mit einer Spannung versorgt (Einschaltfreigabe für die Maschine). Wird diese Spannung unterbrochen (bei einer Systemabschaltung oder Bereichsabschaltung), betätigt die redundante Relaiskombination den Abschaltkreis der Maschine direkt oder über die maschineninterne Steuerung.

In weiterer Ausgestaltung der Erfindung ist in den Sicherheitsstromkreisen zwischen dem Hauptkasten und den Maschinen als ein Knotenpunkt eines Abschaltbereiches ein Verteilkasten angeordnet, der die Spannung parallel auf die in den angeschlossenen Maschinen eingesetzten Relaiseinrichtungen verteilt. Der Verteilkasten dient somit als Verzweigungskasten zwischen einer Zuleitung vom Hauptkasten und den zu den einzelnen Maschinen führenden Sicherheitsstromkreisen. Der Verteilkasten bündelt also mehrere Sicherheitsstromkreise.

In weiterer Ausgestaltung der Erfindung ist ein Nebenkasten als Erweiterungseinheit zum Hauptkasten vorgesehen, um die Anschlußmöglichkeiten von Bereichen und betätigbaren auslösenden Elementen zu erweitern, z.B. zu verdoppeln. Im Nebenkasten wird dabei jedoch keine Systemabschaltung gesteuert. Der Nebenkasten dient lediglich zur Steuerung und Überwachung von Bereichsabschaltungen und bietet Anschlußmöglichkeit für weitere auslösende Elemente der Systemabschaltebene und der Bereichsabschaltebene. Es ist auch möglich, statt einen Nebenkasten zu verwenden, einen größeren Hauptkasten vorzusehen.

In weiterer Ausgestaltung der Erfindung haben die betätigbaren auslösenden Elemente jeweils zwei zwangsunterbrechende Öffnerkontakte zur 2-kanaligen Abschaltung, bei denen es sich in noch weiterer Ausgestaltung der Erfindung um Taster oder Schalter handeln kann. Anstelle von Tastern können auch andere auslösende. Elemente verwendet werden, z.B. Lichtschranken, Bumps, Sicherheitsreißleinen usw., also Elemente, die anlagespezifisch ausgelegt werden. Zweckmäßig sollen jedoch nur auslösende Elemente mit jeweils zwei Öffnerkontakten verwendet werden, um den Sicherheitsanforderungen Genüge zu leisten.

In weiterer Ausgestaltung der Erfindung ist der Hauptkasten mit einer Auswerteinheit verbunden, die in noch weiterer Ausgestaltung der Erfindung mit einer Anzeigeeinheit verbunden ist. Es ist so ein übergeordnetes Anzeige- und Auswertesystem für sämtliche Zustände des Sicherheitsabschaltsystems vorhanden.

Schließlich ist in noch weiterer Ausgestaltung der Erfindung der Sicherungsautomatenschrank so ausgebildet, daß bei Betätigung eines der auslösenden Elemente der Systemebene die zentrale Trennung der Anlage von der Stromversorgung durch eine zweistufige Abschaltung erfolgt, getrennt nach verzögert und unverzögert abzuschaltenden Maschinen, wofür der Sicherungsautomatenschrank ein Leitstungsschütz zum sofortigen Trennen der unverzögert abzuschaltenden Maschinen von der Stromversorgung und ein Leistungsschütz zum verzögerten Trennen der verzögert abzuschaltenden Maschinen von der Stromversorgung hat und wobei die beiden Leistungsschütze über Steuerleitungen mit dem Hauptkasten verbunden sind. In dieser Ausgestaltung der Erfindung können also auf einfache Weise verzögert und unverzögert abzuschaltende Maschinen über einen dem Sicherheitsabschaltsystem zugeordneten verzögerten Kreis bzw. über einen dem Sicherheitsabschaltsystem zugeordneten unverzögerten Kreis abgeschaltet werden.

Ein Ausführungsbeispiel der Erfindung wird im folgenden unter Bezugnahme auf die Zeichnungen näher beschrieben. Es zeigt
- Fig. 1: in Form eines Blockschaltbildes ein Ausführungsbeispiel des Sicherheitsabschaltsystems nach der Erfindung, und
- Fig. 2: ein Prinzipschaltbild des Sicherheitsabschaltsystems nach Fig. 1.

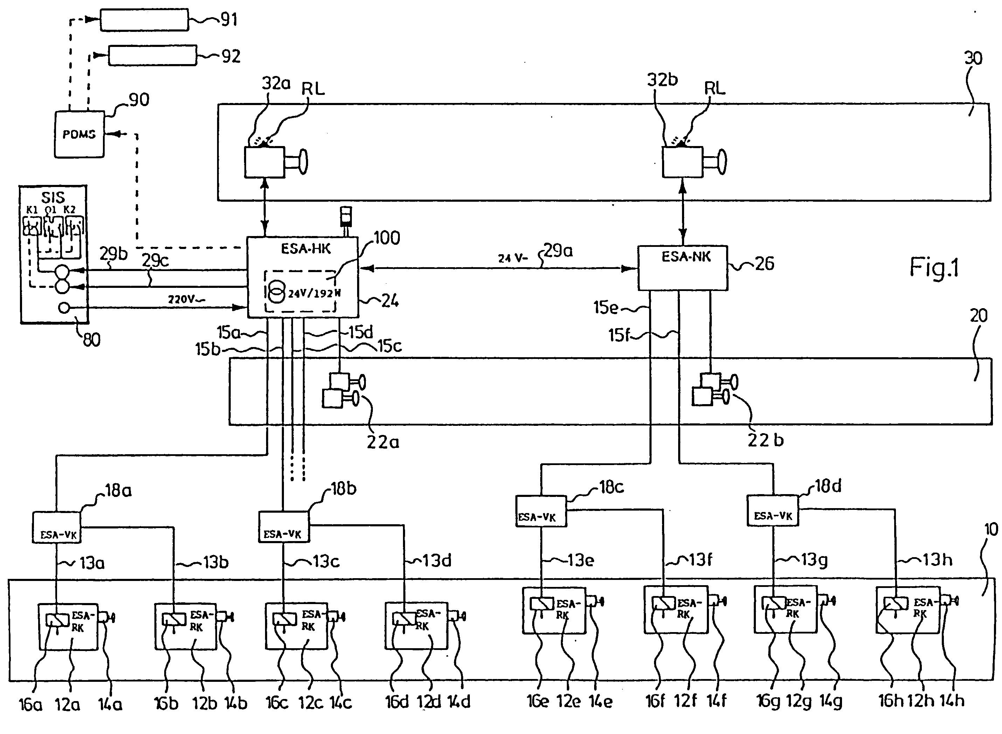

Fig. 1 zeigt ein Blockschaltbild eines hierarchisch aufgebauten Sicherheitsabschaltsystems mit einer Maschinenabschaltebene 10, einer Bereichsabschaltebene 20 und einer Systemabschaltebene 30. Das Sicherheitsabschaltsystem ist für eine Anlage aus Maschinen 12a-12h vorgesehen, die für ein Zusammenwirken konzipiert sind. Eine solche Anlage kann eine Produktionslinie zur Weiterverarbeitung von Druckerzeugnissen, eine Walzstraße, eine Transferstraße od.dgl. sein. Da es für die Erfindung unwesentlich ist, um welche Art von Anlage es sich handelt, braucht auf die Art der Anlage selbst nicht näher eingegangen zu werden.

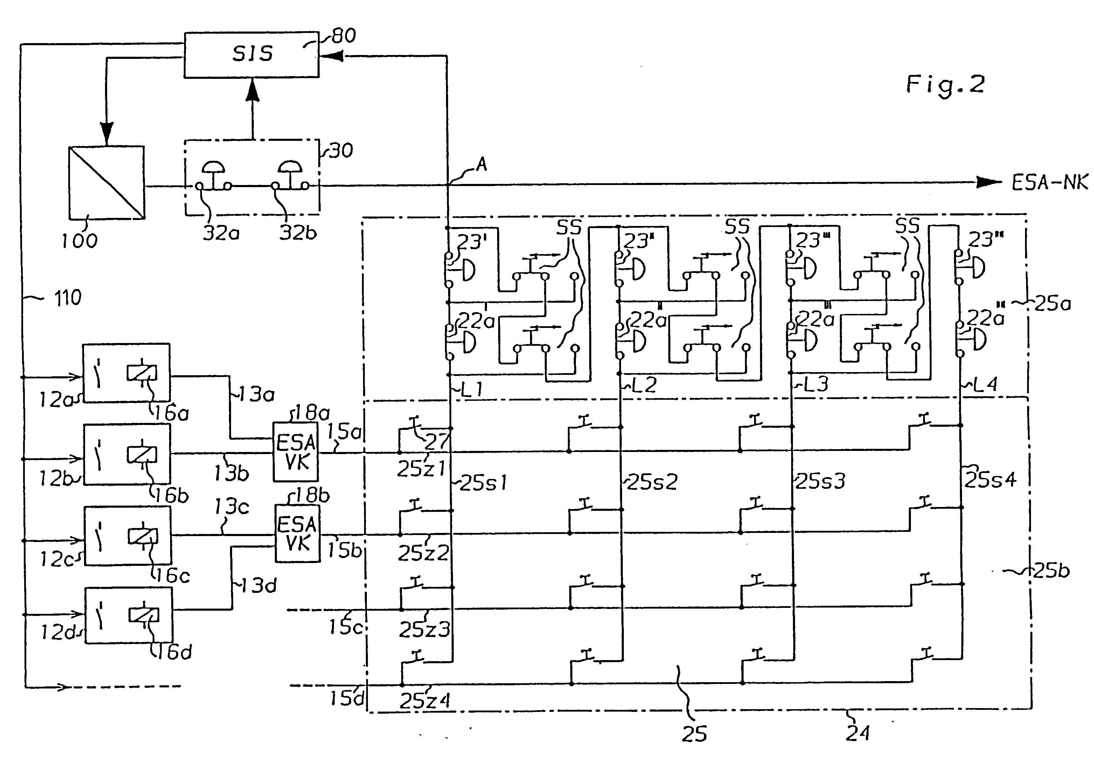

In der Maschinenabschaltebene 10 ist jeder Maschine 12a-12h der Anlage ein eigener Abschaltkreis zugeordnet, der in dem dargestellten Ausführungsbeispiel durch eine Notschalteinrichtung 14a-14h manuell betätigbar ist. Der Abschaltkreis ist hier ein Haltestromkreis, der durch die Notschalteinrichtung 14a-14h geöffnet wird. Weiter weist jeder Abschaltkreis wenigstens ein elektrisch betätigbares Schaltelement 16a-16h auf, bei dem es sich in dem dargestellten Ausführungsbeispiel um die Spule einer Relaiseinrichtung handelt, die ebenfalls in dem Haltestromkreis liegt und einen zugeordneten Ruhekontakt hat, wie es in Fig. 2 angedeutet ist. Der Haltestromkreis innerhalb der Maschine 12a-12h, in welchem die Notschalteinrichtung 14a-14h und das elektrisch betätigbare Schaltelement 16a-16h liegen, ist hier lediglich als ein vereinfachendes Beispiel angenommen worden. Es könnte auch jeder Notschalteinrichtung und jedem elektrisch betätigbaren Schaltelement ein eigener Haltestromkreis zugeordnet sein, der auf die interne Maschinensteuerung (nicht dargestellt) in geeigneter Weise einwirken kann. Die Wirkung der manuellen Notschalteinrichtungen 14a-14h und der elektrisch betätigbaren Schaltelemente 16a-16h beschränkt sich auf diejenigen Maschinen, denen sie jeweils zugeordnet sind. Benachbarte Maschinen werden, wenn nötig, gestoppt, aber nicht abgeschaltet.

In der Bereichsabschaltebene 20 sind betätigbare auslösende Elemente 22a, 22b zusammengefaßt, bei deren Betätigung Gruppen von produktionstechnisch zusammengehörenden Maschinen sofort von einer der Anlage zugeordneten Stromversorgung 100 getrennt werden oder Maschinen oder Gruppen von produktionstechnisch zusammengehörenden Maschinen elektrisch stillgesetzt (gebremst) und danach von der Stromversorgung getrennt werden. Als betätigbare auslösende Elemente 22a, 22b sind Taster vorgesehen, die jeweils zwei zwangsunterbrechende Öffnerkontakte zur 2-kanaligen Abschaltung haben. In den Zeichnungen dargestellte Sicherheitsstromkreise 13a-13h und Steuerleitungen 15a-15f, 29a-29c, die im folgenden noch näher erläutert sind, sind jeweils vereinfacht dargestellte Zweidrahtleitungen.

Unter der vorgenannten Stromversorgung 100 ist die Hauptstromversorgung des Sicherheitsabschaltsystems zu verstehen, nicht die Netzstromversorgung der durch das Sicherheitsabschaltsystem abzuschaltenden Maschinen 12a-12h. Die Stromversorgung 100 ist in Fig. 1 der übersichtlichkeit halber weggelassen und lediglich in Fig. 2 dargestellt worden. Als Teil der erwähnten Netzstromversorgung der Maschinen 12a-12h ist in Fig. 2 lediglich eine gemeinsame Leitung 110 dargestellt, die über einen weiter unten erläuterten Sicherungsautomatenschrank (SIS) 80 vom (nicht dargestellten) Netz trennbar ist. Wenn in der in Fig. 2 gezeigten Schaltung die Trennung der Anlage von der Stromversorgung 100 erfolgt, wird dadurch die Leitung 110 stromlos gemacht.

In der Systemabschaltebene 30 sind betätigbare auslösende Elemente 32a, 32b zusammengefaßt, mit denen sämtliche Maschinen 12a-12d bzw. 12e-12h einer Produktionslinie oder einer gesamten Anlage gemeinsam abschaltbar sind. Die betätigbaren auslösenden Elemente 32a, 32b sind vorzugsweise ebenfalls jeweils Taster. Bei deren Betätigung wird die gesamte Produktionslinie systematisch stillgesetzt und zentral in einem weiter unten noch näher beschriebenen Sicherungsautomatenschrank (SIS) 80 von der Stromversorgung 100 getrennt. Systematisches Stillsetzen beinhaltet, wenn nötig, elektrische Bremsung von Maschinen, Datensicherung eines Prozeßrechners (nicht dargestellt) und Abschalten der Stromversorgung. Unter Abschaltung soll hier Stillsetzen von mechanischen und pneumatischen Bewegungen sowie die Vernichtung von gefahrbringenden Energien einer oder mehrerer Maschinen verstanden werden.

In dem hier beschriebenen Ausführungsbeispiel sind die elektrisch betätigbaren Schaltelemente 16a-16h der Maschinen 12a-12h jeweils über einen der Sicherheitsstromkreise 13a-13d und 13e-13h und paarweise über eine der Steuerleitungen 15a-15d bzw. 15e und 15f an einen Hauptkasten (ESA-HK) 24 für die zentrale Steuerung des Sicherheitsabschaltsystems bzw. an einen mit dem Hauptkasten über die Steuerleitung 29a verbundenen Nebenkasten (ESA-NK) 26 angeschlossen. Der Hauptkasten ist darüber hinaus über die Steuerleitungen 29b und 29c mit zwei im Sicherungsautomatenschrank 80 enthaltenen Leistungsschützen K1 und K2 verbunden, deren Funktion weiter unten erläutert ist. Der Nebenkasten 26 ist lediglich eine Erweiterungseinheit zum Hauptkasten 24, um die Anschlußmöglichkeiten von Bereichen und von betätigbaren auslösenden Elementen zu verdoppeln. Bei entsprechender Anschlußkapazität des Hauptkastens 24 kann der Nebenkasten 26 entfallen, und sämtliche Sicherheitsstromkreise 13a-13h können über die Steuerleitungen 15a-15f an ein und denselben Hauptkasten 24 angeschlossen werden. Über die Steuerleitungen 15a-15f und den Haupt- und Nebenkasten 24, 26 sind die Sicherheitsstromkreise 13a-13h an die Stromversorgung 100 angeschlossen. Auf weiter unten noch näher beschriebene Weise bestimmt der Hauptkasten 24, welche Bereiche oder Gruppen von Maschinen 12a, 12b, bzw. 12c, 12d bei Betätigung eines der auslösenden Elemente 22a abgeschaltet werden. Da der Nebenkasten 26 lediglich eine Erweiterung des Hauptkastens 24 darstellt, beschränkt sich die folgende Beschreibung auf die mit dem Hauptkasten 24 direkt verbundenen Einrichtungen.

Zwischen den Sicherheitsstromkreisen 13a-13d und deren Steuerleitungen 15a, 15b sind zwischen dem Hauptkasten 24 und den Maschinen 12a-12d als Knotenpunkte von zwei Abschaltbereichen zwei Verteilkästen (ESA-VK) 18a, 18b angeordnet, die jeweils eine vom Hauptkasten 24 über die Steuerleitungen 15a, 15b abgegebene Haltespannung für die Sicherheitsstromkreise parallel über die Sicherheitsstromkreise 13a, 13b bzw. 13c, 13d auf die in den angeschlossenen Maschinen eingesetzten Schaltelemente 16a, 16b bzw. 16c, 16d verteilen. (Entsprechendes gilt für Verteilkästen 18c, 18d, die eine vom Nebenkasten 26 abgegebene Haltespannung parallel auf die Maschinen 12e-12h verteilen.) Die Verteilkästen sind also eine Art von Steuerleitungskonzentratoren.

Die elektrisch betätigbaren Schaltelemente 16a-16d in den Abschaltkreisen der Maschinen 12a-12d bestehen jeweils aus der oben bereits erwähnten Relaiseinrichtung, die im Normalbetrieb vom Hauptkasten 24 mit der Haltespannung angesteuert wird und bei Unterbrechung dieser Spannung die Maschine abschaltet. Jede Relaiseinrichtung ist als eine redundante Relaiskombination (ESA-RK) ausgebildet. Im Normalbetrieb wird die redundante Relaiskombination vom Hauptkasten 24 bzw. Nebenkasten 26 mit einer Haltegleichspannung von 24 V angesteuert. Wenn diese Spannung unterbrochen wird (bei einer Systemabschaltung oder Bereichsabschaltung), unterbricht die redundante Relaiskombination direkt den Abschaltkreis in der Maschine oder gibt einen geeigneten Abschaltbefehl an die maschineninterne Steuerung ab. Jede Relaiskombination besteht aus einer Verknüpfung von drei Relais mit zwangsgeführten Kontakten und erfüllt somit die Forderung einer selbstkontrollierenden Steuerung. Als selbstkontrollierend bezeichnet man Schaltungen, in denen und mit denen jeder Erstfehler an den beteiligten Schaltgeräten erkannt und die Wiedereinschaltung oder Reaktivierung der Sicherheitseinrichtung selbsttätig verhindert wird. Dabei wird die eigentliche Sicherheitsfunktion nicht beeinträchtigt, d.h. die Abschaltfunktion ist auch bei einem Fehler in der elektrischen Einrichtung wenigstens noch einmal einwandfrei und zuverlässig gewährleistet. Danach ist die Wiedereinschaltung so lange verhindert, bis der aufgetretene Fehler beseitigt ist. Die Abschaltung erfolgt, wie oben bereits erwähnt, 2-kanalig und mit unterschiedlichen Potentialen, d.h. Notaustaster usw. sind mit je zwei Öffnerkontakten ausgelegt, da das gleichzeitige Vorhandensein von zwei Fehlern ausgeschlossen wird.

Die manuellen Notschalteinrichtungen 14a-14h, die jeder Maschine einzeln zugeordnet sind, und die auslösenden Elemente 22a, 22b in der Bereichsabschaltebene 20 sowie die auslösenden Elemente 32a, 32b in der Systemabschaltebene 30 sind jweils unterschiedlich markiert und gekennzeichnet, damit die Bedienungsperson bei manuell auszulösenden Elementen wie Tastern und dgl. von vornherein weiß, in welcher Ebene sie einen Abschaltvorgang auslöst. Die auslösenden Elemente 22a, 22b in der Bereichsabschaltebene 20 sind als Taster mit roter Identifikationslampe (nicht dargestellt) ausgebildet, die sofort aufleuchtet, sobald der Taster betätigt wird. Somit wird die Auslösung jedes Tasters der Bereichsabschaltebene 20 auf weite Sicht erkannt. Zusätzlich kann eine grüne Abschaltüberwachungslampe (nicht dargestellt) am Taster der Bereichsabschaltebene 20 vorgesehen werden, die aufleuchtet, sobald sämtliche Maschinen des entsprechenden Bereiches sicher stillgesetzt worden sind. Die grüne Abschaltüberwachungslampe leuchtet nur auf, wenn der Taster der Bereichsabschaltebene 20 betätigt wurde, also nicht bei einer Systemabschaltung. Entsprechend ist auch jedes betätigbare auslösende Elemente 32a, 32b in der Systemabschaltebene 30, bei denen es sich hier ebenfalls um Taster handelt, mit einer roten Identifikationslampe RL ausgestattet. Die Steuereinrichtungen für diese überwachungslampen sind nicht teil der Erfindung und werden daher auch nicht weiter beschrieben.

Die in dem Sicherheitsabschaltsystem nach der Erfindung verwendeten Taster der Bereichsabschaltebene 20 und der Systemabschaltebene 30 geben grundsätzlich eine Zustandsinformation ab. Die Taster sind einrastende Taster. Von jedem Taster wird, bereits wenn er niedergedrückt wird, eine Rücksetzfunktion von der Maschine aus eingeleitet, also noch bevor der Taster eingerastet ist, bewirkt er bereits, daß in der Maschine das Rücksetzen für den Abschaltvorgang eingeleitet wird. Jeder Taster bleibt in der eingerasteten Stellung, bis er manuell zurückgestellt wird.

Anhand des in Fig. 2 dargestellten Prinzipschaltbildes wird nun der Aufbau des Hauptkastens 24 näher beschrieben. Der Hauptkasten 24 enthält eine mechanische Schaltmatrix 25, durch die die Sicherheitsstromkreise 13a-13d, 15a-15d wahlweise so miteinander verknüpfbar sind, daß beim Betätigen eines der auslösenden Elemente 22a der Bereichsabschaltebene 20 Bereiche, die aus Maschinen oder aus Gruppen von zusammengehörenden Maschinen bestehen, abgeschaltet werden. In Fig. 1 sind an den Ausgang des Hauptkastens 24 die vier Steuerleitungen 15a-15d angeschlossen, wobei die Steuerleitung 15a einen aus den Maschinen 12a, 12b gebildeten Abschaltbereich mit einer Steuerspannung versorgt, die Steuerleitung 15b einen aus den Maschinen 12c und 12d gebildeten Abschaltbereich, wobei die an die Steuerleitungen 15c und 15d angeschlossenen Abschaltbereiche der Übersichtlichkeit halber nicht dargestellt worden sind. Auch in Fig. 2 sind die an die Steuerleitungen 15c und 15d angeschlossenen Maschinen nicht dargestellt. Es ist aber klar, daß an die Steuerleitungen 15c und 15d jeweils eine einzelne Maschine oder eine Gruppe von Maschinen angeschlossen sein wird. Die Steuerleitungen 15a-15f sind Teil der mit ihnen verbundenen Sicherheitsstromkreise 13a-13h.

Die Schaltmatrix 25 besteht aus einer Prioritätsmatrix 25a und einer Zuweisungsmatrix 25b. Die Zuweisungsmatrix 25b besteht aus Zeilen- und Spaltenleitungen 25z1-25z4 bzw. 25s1-25s4, die an ihren Kreuzungspunkten durch mechanische Schalter 27 verbindbar sind. Von diesen mechanischen Schaltern 27 sind in dem in Fig. 2 gezeigten Ausführungsbeispiel sechzehn vorhanden, wobei zur Vereinfachung nur einer mit der Bezugszahl 27 bezeichnet worden ist. Weiter sind in dem in Fig. 2 dargestellten Ausführungsbeispiel die Zeilenleitungen 25z1 und 25z2 mit den Sicherheitsstromkreisen 13a-13d, 15a, 15b verbunden (die an die Zeilenleitlungen 25z3 und 25z4 über die Steuerleitungen 15c und 15d angeschlossenen Sicherheitsstromkreise sind der Einfachheit halber nicht dargestellt, wie erwähnt). Die Spaltenleitungen 25s1-25s4 sind mit Leitungen L1-L4 der Prioritätsmatrix 25a verbunden und innerhalb derselben durch weitere mechanische Schalter SS, die hier als dreipolige Umschalter dargestellt sind, miteinander und mit einem gemeinsamen Anschluß A des Hauptkastens 24 verbindbar. Es sind sechs Umschalter SS vorgesehen, die auf die in Fig. 1 dargestellte Weise angeschlossen sind. Die auslösenden Elemente 22a - 22a'''' der Bereichsabschaltebene 20 liegen in der Prioritätsmatrix 25a jeweils in den die Fortsetzungen der Spaltenleitungen 25s1-25s4 bildenden Leitungen L1-L4. Die Umschalter SS sind so angeordnet und ausgebildet, daß das Ende jeder folgenden Leitung in der Prioritätsmatrix 25a mit der vorhergehenden Leitung wahlweise vor oder nach dem Umschalter SS in der vorhergehenden Leitung verbindbar ist. Weiter liegen die auslösenden Elemente 22a'-22a'''' der Bereichsabschaltebene 20 jeweils in Reihenschaltung mit einem Sicherheitselement 23'-23'''' in den Leitungen L1-L4 in der Prioritätsmatrix 25a. Pro Spaltenleitung 25s1-25s4 ist ein Paar Umschalter SS vorgesehen. Einer der Umschalter SS jedes Umschalterpaares ist gemäß der Darstellung in Fig. 2 so angeordnet und ausgebildet, daß das Ende jeder folgenden Leitung in der Prioritätsmatrix 25a mit der vorhergehenden Leitung wahlweise vor oder nach der Reihenschaltung aus auslösendem Element und Sicherheitselement oder mit der innerhalb der Reihenschaltung vorgesehenen Verbindung zwischen dem auslösenden Element und dem Sicherheitselement in der vorhergehenden Leitung verbindbar ist.

Aufgrund der in Fig. 2 gezeigten Stellungen der Umschalter SS ist die Leitung L2 mit der Leitung L1 vor der Reihenschaltung aus dem auslösenden Element 22a' und dem Sicherheitselement 23' verbunden. Wenn also das auslösende Element 22a' oder das Sicherheitselement 23' betätigt wird, wird zwar die an der Spaltenleitung 25s1 liegende Spannung unterbrochen, die Spannung liegt jedoch weiterhin an den Leitungen L2-L4 und somit an den Spaltenleitungen 25s2-25s4 an. Würde der in Fig. 2 in der Prioritätsmatrix 25a oben links dargestellte Umschalter SS in seine rechte Schalterstellung gebracht werden, würde beim Betätigen des Sicherheitselements 23' nicht nur die Leitung L1 und die Spaltenleitung 25s1 spannungslos, sondern auch alle nachfolgenden Leitungen L2-L4 und 25s2-25s4. Auf die geschilderte Weise lassen sich also durch entsprechendes Wählen der Stellungen der Umschalter SS Prioritäten festlegen, nach denen ein auslösendes Element und ein Sicherheitselement in einer vorangehenden Leitung den Spannungszustand von nachfolgenden Leitungen beeinflussen. Diese Prioritäten gelten für die Verbindungen der Leitungen L1-L4 miteinander und mit dem gemeinsamen Anschluß A des Hauptkastens 24. Die gegenseitige Zuweisung der Spaltenleitungen 25s1-25s4 und der Zeilenleitungen 25z1-25z2 erfolgt, wie erwähnt, mittels der Schalter 27. Wenn der in der Zuweisungsmatrix 25b oben links dargestellte Schalter 27 geschlossen wird, wird die Spaltenleitung 25s1, die an die Leitung L1 in der Prioritätsmatrix 25a angeschlossen ist, an ihrem Kreuzungspunkt mit der Zeilenleitung 25z1 mit dieser verbunden, usw. Auf diese Weise lassen sich Spalten- und Zeilenleitungen einander beliebig zuordnen und so auf einfache Weise Maschinen wahlweise in Abschaltbereichen zusammenfassen. Der Anschluß A des Hauptkastens 24 ist, wie in Fig. 2 angedeutet, mit dem Sicherungsautomatenschrank 80 verbunden. In dem Prinzipschaltbild in Fig. 2 bildet der Anschluß A zugleich den Anschluß für den Hauptkasten 24 und den Anschluß für die Stromversorgung 100 und die Systemabschaltebene 30. Die Leitung 110 verbindet in Fig. 2 den Sicherungsautomatenschrank 80 mit den Maschinen 12a-12d, ist also Teil des Leistungskreises der Maschinen, von welchen jede Maschine durch Unterbrechungskontakte trennbar ist, welche durch die Schaltelemente 16a-16d betätigt werden, die Teil des Steuerkreises der Maschine sind, der seinerseits Teil des Sicherheitsabschaltsystems ist.

Der Aufbau und die Funktionsweise der Schaltmatrix 25 gestatten also durch entsprechendes Einstellen der Schalter 27 und der Umschalter SS von vornherein und zentral im Hauptkasten festzulegen, welche Maschinen oder Maschinengruppen abgeschaltet werden sollen, wenn eines der auslösenden Elemente 22a'-22a'''' und/oder eines der Sicherheitselemente 23'-23'''' betätigt wird. Den Abschaltvorgang selbst steuert der Hauptkasten 24 in Verbindung mit dem Sicherungsautomatenschrank 80 folgendermaßen.

Beim Betätigen eines der Systemtaster 32a, 32b werden sämtliche Maschinen durch eine zweistufige Abschaltung im Sicherungsautomatenschrank 80 von der Stromversorgung 100 getrennt, und zwar lassen sich dabei gemäß Fig. 1 Maschinen mittels eines Leistungsschützes K1 sofort von der Stromversorgung trennen, wogegen sich andere Maschinen mittels eines Leistungsschützes K2 verzögert von der Stromversorgung trennen lassen (z.B. mit einer Verzögerungszeit von 0,5-10 Sekunden). Dabei werden Prozeßleitrechner und dgl. jedoch nicht spannungslos geschaltet. Die zentrale Steuereinheit für die Sicherheitsabschaltung der Anlage ist der Hauptkasten 24. Wenn irgendeines der auslösenden Elemente 22a'-22a'''' und/oder irgendeines der Sicherheitselemente 23'-23'''' der Bereichsabschaltebene 20 oder irgendeines der auslösenden Elemente 32a, 32b der Systemabschaltebene 30 betätigt wird (d.h. geöffnet wird, da sie jeweils normalerweise geschlossene Ruhekontakte aufweisen), wird die durch entsprechende Stellung der Schalter 27 und der Umschalter SS zugeordnete Steuerleitung 15a-15d spannungslos, so daß die zugeordnete Relaiseinrichtung der Relaiseinrichtungen 16a-16h abfällt, um die entsprechende Maschine der Maschinen 12a-12h abzuschalten. Eine Wechselspannung von 220 V aus der Stromversorgung 100 kann, wie in Fig. 1 angedeutet, direkt über den Sicherungsautomatenschrank 80 an den Hauptkasten 24 angelegt (oder extern zugeführt) werden.

Weiter ist gemäß Fig. 1 der Hauptkasten 24 mit einem übergeordneten Anzeige- und Auswertesystem (PDMS) 90 für sämtliche Zustände des Sicherheitsabschaltsystems verbunden. Das Anzeige- und Auswertesystem 90 enthält eine Auswerteeinheit (nicht im einzelnen dargestellt), die mit örtlich getrennt aufbaubaren Anzeigeeinheiten 91, 92 verbunden ist. In dem Sicherheitsabschaltsystem werden sämtliche Leitungen ständig auf Durchgang überwacht, um die passive Sicherheit zu erhöhen. Auftretende Störungen oder auslösende Sicherheitsschalter können durch die Anzeigeeinheiten 91, 92 angezeigt werden. Die für die Durchgangsüberwachung der Leitungen vorgesehenen Einrichtungen sind ebenfalls nicht dargestellt worden.

Schließlich enthält das Sicherheitsabschaltsystem Überwachungseinrichtungen, die feststellen, ob ein gewünschter Abschaltvorgang tatsächlich ausgeführt worden ist. Dies wird einerseits auf dem Hauptkasten und ebenfalls über die Anzeigeeinheiten 91, 92 angezeigt. Auch diese Überwachungseinrichtungen sind nicht im einzelnen dargestellt worden. Die zusätzlich vorgesehene Anzeigemöglichkeit mittels Identifikationslampen an den Tastern ist oben bereits erwähnt worden.

## Patentansprüche

1. Sicherheitsabschaltsystem für eine Anlage aus Maschinen, die für ein Zusammenwirken konzipiert sind, mit einer Maschinenabschaltebene (10), in der jeder Maschine (12a-12h) ein eigener Abschaltkreis zugeordnet ist, und mit einer der Maschinenabschaltebene (10) übergeordneten Bereichsabschaltebene (20), in der Bereiche, die aus Maschinen oder aus Gruppen von zusammengehörenden Maschinen bestehen, abschaltbar sind,
**dadurch gekennzeichnet**,
daß jeder Abschaltkreis wenigstens ein elektrisch betätigbares Schaltelement (16a-16h) aufweist,
daß die elektrisch betätigbaren Schaltelemente (16a-16h) über Sicherheitsstromkreise (13a-13h) an wenigstens einen Hauptkasten (24) für die zentrale Steuerung des Sicherheitsabschaltsystems und durch diesen an eine Stromversorgung (100) angeschlossen sind,
daß den Sicherheitsstromkreisen (13a-13h) betätigbare auslösende Elemente (22a, 22b) in der Bereichsabschaltebene (20) zugeordnet sind, und
daß der Hauptkasten (24) eine mechanische Schaltmatrix (25) enthält, durch die die Sicherheitsstromkreise (13a-13h) wahlweise so miteinander verknüpfbar sind, daß durch Betätigen eines der auslösenden Elemente (22a, 22b) der Bereichsabschaltebene (20) vorbestimmte Bereiche oder Gruppen von Maschinen abschaltbar sind.

2. Sicherheitsabschaltsystem nach Anspruch 1, dadurch gekennzeichnet, daß sämtlichen Maschinen (12a-12h) der Anlage wenigstens ein betätigbares auslösendes Element (32a, 32b) in einer der Bereichsabschaltebene (20) übergeordneten Systemabschaltebene (30) zugeordnet ist, das in einer Verbindung zwischen der Stromversorgung (100) und dem Hauptkasten (24) liegt und daher bei seiner Betätigung bewirkt, daß die gesamte Anlage zentral von der Stromversorgung (100) getrennt wird.

3. Sicherheitsabschaltsystem nach Anspruch 1 oder 2, dadurch gekennzeichnet, daß die Schaltmatrix (25) eine Prioritätsmatrix (25a) und eine Zuweisungsmatrix (25b) aufweist,
wobei die Zuweisungsmatrix (25b) aus Zeilen- und Spaltenleitungen (25z1-25z4, 25s1-25s4) besteht, die an ihren Kreuzungspunkten durch mechanische Schalter (27) verbindbar sind, und
wobei von den Zeilen- und Spaltenleitungen die einen (25z1-25z4) mit den Sicherheitsstromkreisen (13a-13h) verbunden sind und die anderen (25s1-25s4) mit Leitungen (L1-L4) der Prioritätsmatrix (25a) verbunden und innerhalb derselben durch weitere mechanische Schalter (SS) miteinander und mit einem gemeinsamen Anschluß (A) des Hauptkastens (24) verbindbar sind.

4. Sicherheitsabschaltsystem nach Anspruch 3, dadurch gekennzeichnet, daß die auslösenden Elemente (22a'-22a'''') der Bereichsabschaltebene (20) in den Leitungen (L1-L4) in der Prioritätsmatrix (25a) liegen und daß die weiteren mechanischen Schalter (SS) so angeordnet und ausgebildet sind, daß das Ende jeder folgenden Leitung in der Prioritätsmatrix (25a) mit der vorhergehenden Leitung wahlweise vor oder nach dem auslösenden Element (22a'-22a'''') in der vorhergehenden Leitung verbindbar ist.

5. Sicherheitsabschalsystem nach Anspruch 3, dadurch gekennzeichnet, daß die auslösenden Elemente (22a'-22a'''') der Bereichsabschaltebene (20) jeweils in Reihenschaltung mit wenigstens einem Sicherheitselement (23'-23'''') in den Leitungen (L1-L4) in der Prioritätsmatrix (25a) liegen und daß die weiteren mechanischen Schalter (SS) so angeordnet und ausgebildet sind, daß das Ende jeder folgenden Leitung in der Prioritätsmatrix (25a) mit der vorhergehenden Leitung wahlweise vor oder nach der Reihenschaltung oder mit der innerhalb der Reihenschaltung vorgesehenen Verbindung zwischen dem auslösenden Element (22a'-22a'''') und dem Sicherheitselement (23'-23'''') in der vorhergehenden Leitung verbindbar ist.

6. Sicherheitsabschaltsystem nach Anspruch 2, gekennzeichnet durch einen mit dem Hauptkasten (24) verbundenen Sicherungsautomatenschrank (80), in dem bei einer Abschaltung in der Systemabschaltebene (30) die zentrale Trennung der Anlage von der Stromversorgung (100) erfolgt.

7. Sicherheitsabschaltsystem nach einem der Ansprüche 1 bis 6, dadurch gekennzeichnet, daß die elektrisch betätigbaren Schaltelemente (16a-16h) in den Abschaltkreisen der Maschinen (12a-12h) jeweils aus einer Relaiseinrichtung bestehen, die im Normalbetrieb vom Hauptkasten (24) mit einer Spannung angesteuert wird und bei Unterbrechung dieser Spannung die Maschine abschaltet.

8. Sicherheitsabschaltsystem nach Anspruch 7, dadurch gekennzeichnet, daß die Relaiseinrichtungen (16a-16h) jeweils aus einer redundanten Relaiskombination bestehen.

9. Sicherheitsabschaltsystem nach Anspruch 7 oder 8, dadurch gekennzeichnet, daß in den Sicherheitsstromkreisen (13a-13d) zwischen dem Hauptkasten (24) und den Maschinen (12a-12d) als ein Knotenpunkt eines Abschaltbereiches ein Verteilkasten (18a-18b) angeordnet ist, der die Spannung parallel auf die in den angeschlossenen Maschinen (12a-12d) eingesetzten Relaiseinrichtungen (16a-16d) verteilt.

10. Sicherheitsabschaltsystem, nach einem der Ansprüche 1 bis 9, gekennzeichnet durch einen Nebenkasten (26) als Erweiterungseinheit zum Hauptkasten (24) zum Erweitern der Anschlußmöglichkeiten von Abschaltbereichen und betätigbaren auslösenden Elementen (22b, 32b).

11. Sicherheitsabschaltsystem nach einem der Ansprüche 1 bis 10, dadurch gekennzeichnet, daß die betätigbaren auslösenden Elemente (22a, 22b, 32a, 32b) jeweils zwei zwangsunterbrechende Öffnerkontakte zur 2-kanaligen Abschaltung haben.

12. Sicherheitsabschaltsystem nach Anspruch 11, dadurch gekennzeichnet, daß die betätigbaren auslösenden Elemente (22a, 22b, 32a, 32b) Taster oder Schalter sind.

13. Sicherheitsabschaltsystem nach einem der Ansprüche 1 bis 12, dadurch gekennzeichnet, daß der Hauptkasten (24) mit einer Auswerteeinheit verbunden ist.

14. Sicherheitsabschaltsystem nach Anspruch 13, dadurch gekennzeichnet, daß die Auswerteeinheit mit wenigstens einer Anzeigeeinheit (91, 92) verbunden ist.

15. Sicherheitsabschaltsystem nach Anspruch 6, dadurch gekennzeichnet, daß der Sicherungsautomatenschrank (80) so ausgebildet ist, daß bei Betätigung eines der auslösenden Elemente (32a, 32b) der Systemebene (30) die zentrale Trennung der Anlage von der Stromversorgung (100) durch eine zweistufige Abschaltung erfolgt, getrennt nach verzögert und unverzögert abzuschaltenden Maschinen (12a-12h).

16. Sicherheitsabschaltsystem nach Anspruch 15, dadurch gekennzeichnet, daß der Sicherungsautomatenschrank (80) ein Leistungsschütz (K1) zum sofortigen Trennen der unverzögert abzuschaltenden Maschinen von der Stromversorgung und ein Leistungsschütz (K2) zum verzögerten Trennen der verzögert abzuschaltenden Maschinen von der Stromversorgung aufweist, wobei die beiden Leistungsschütze (K1, K2) über Steuerleitungen (29b, 29c) mit dem Hauptkasten (24) verbunden sind.

## Claims

1. Safety shutdown system for a plant consisting of machines which are designed for cooperation, with a machine shutdown level (10) at which each machine (12a-12h) is assigned its own shutdown circuit, and with a zone shutdown level (20) which overrides the machine shutdown level (10) and in which zones which consist of machines or groups of associated machines can be shut down, characterised in that each shutdown circuit comprises at least one electrically operable switching element (16a-16h), in that the electrically operable switching elements (16a-16h) are connected by safety circuits (13a-13h) to at least one main box (24) for central control of the safety shutdown system and by this box to a power supply (100), in that operable trigger elements (22a, 22b) at the zone shutdown level (20) are assigned to the safety circuits (13a-13h), and in that the main box (24) contains a mechanical switching matrix (25) by which the safety circuits (13a-13h) can be linked to each other selectively in such a way that, by operating one of the trigger elements (22a, 22b) of the zone shutdown level (20), predetermined zones or groups of machines can be shut down.

2. Safety shutdown system according to claim 1, characterised in that all the machines (12a-12h) of the plant are assigned at least one operable trigger element (32a, 32b) at a system shutdown level (30) which overrides the zone shutdown level (20) and which is located in a connection between the power supply (100) and the main box (24) and therefore upon operation thereof causes the whole plant to be centrally disconnected from the power supply (100).

3. Safety shutdown system according to claim 1 or 2, characterised in that the switching matrix (25) comprises a priority matrix (25a) and an allocation matrix (25b), wherein the allocation matrix (25b) consists of row and column lines 25z1-25z4, 25s1-25s4) which can be connected at their points of intersection by mechanical switches (27), and wherein, of the row and column lines, the ones (25zl-25z4) are connected to the safety circuits (13a-13h) and the others (25sl-25s4) are connected to lines (L1-L4) of the priority matrix (25a) and, within it, can be connected by further mechanical switches (SS) to each other and to a common terminal (A) of the main box (24).

4. Safety shutdown system according to claim 3, characterised in that the trigger elements (22a'-22a'''') of the zone shutdown level (20) are located in the lines (L1-L4) in the priority matrix (25a) and in that the further mechanical switches (SS) are arranged and designed in such a way that the end of each following line in the priority matrix (25a) can be connected to the preceding line selectively in front of or behind the trigger element (22a'-22a'''') in the preceding line.

5. Safety shutdown system according to claim 3, characterised in that the trigger elements (22a'-22a'''') of the zone shutdown level (20) are in each case connected in series with at least one safety element (23'-23'''') in the lines (L1-L4) in the priority matrix (25a) and in that the further mechanical switches (SS) are arranged and designed in such a way that the end of each following line in the priority matrix (25a) can be connected to the preceding line selectively in front of or behind the series circuit or to the connection provided within the series circuit between the trigger element (22a'-22a'''') and the safety element (23'-23'''') in the preceding line.

6. Safety shutdown system according to claim 2, characterised by an automatic cut-out cabinet (80) which is connected to the main box (24) and in which, upon a shutdown at the system shutdown level (30), central 3 disconnection of the plant from the power supply (100) takes place.

7. Safety shutdown system according to any of claims 1 to 6, characterised in that the electrically operable switching elements (16a-16h) in the shutdown circuits of the machines (12a-12h) in each case consist of a relay device which during normal operation is triggered from the main box (24) with a voltage and, upon interruption of this voltage, shuts down the machine.

8. Safety shutdown system according to claim 7, characterised in that the relay devices (16a-16h) in each case consist of a redundant relay combination.

9. Safety shutdown system according to claim 7 or 8, characterised in that in the safety circuits (13a-13d) between the main box (24) and the machines (12a-12d) as a junction of a shutdown zone is arranged a distribution box (18a-18b) which distributes the voltage in parallel to the relay devices (16a-16d) inserted in the connected machines (12a-12d).

10. Safety shutdown system according to any of claims 1 to 9, characterised by an auxiliary box (26) as an extension unit to the main box (24) for extending the possibilities of connection of shutdown zones and operable trigger elements (22b, 32b).

11. Safety shutdown system according to any of claims 1 to 10, characterised in that the operable trigger elements (22a, 22b, 32a, 32b) in each case have two forcedinterruption normally closed contacts for two-channel shutdown.

12. Safety shutdown system according to claim 11, characterised in that the operable trigger elements (22a, 22b, 32a, 32b) are pushbuttons or switches.

13. Safety shutdown system according to any of claims 1 to 12, characterised in that the main box (24) is connected to an analyser unit.

14. Safety shutdown system according to claim 13, characterised in that the analyser unit is connected to at least one indicating unit (91, 92).

15. Safety shutdown system according to claim 6, characterised in that the automatic cut-out cabinet (80) is designed in such a way that, on operation of one of the trigger elements (32a, 32b) of the system level (30), central disconnection of the plant from the power supply (100) takes place by a two-stage shutdown, disconnected according to machines (12a-12h) to be shut down with a delay and without a delay.

16. Safety shutdown system according to claim 15, characterised in that the automatic cut-out cabinet (80) comprises a power protector (K1) for immediate disconnection of the machines to be shut down without a delay from the power supply, and a power protector (K2) for delayed disconnection of the machines to be shut down with a delay from the power supply, wherein the two power protectors (K1, K2) are connected by control lines (29b, 29c) to the main box (24).

## Revendications

1. Système d'arrêt de sécurité pour une installation composée de machines qui sont conçues pour une action conjuguée, avec une position d'arrêt de chaque machine (10) dans lequel un circuit propre est attribué à chacune de ces machines (12a-12h), et avec une position d'arrêt de zone (20) prioritaire sur la position d'arrêt de machine (10), et dans lequel on peut arrêter des zones qui comprennent des machines ou des groupes de machines correspondantes, caractérisé en ce que chaque circuit d'arrêt présente au moins un élément de commutation (16a-16h), actionnable électriquement,
en ce que les éléments de commutation (16a-16h) actionnables électriquement sont raccordés par des circuits de sécurité (13a-13h) à au moins un coffret principal (24) pour la commande centralisée du système d'arrêt de sécurité et par celui-ci à une alimentation électrique (100),
en ce que des éléments (22a-22b) qui peuvent déclencher et être actionnés sont attribués aux circuits de sécurité (13a-13h) à la position d'arrêt de zone (20), et
en ce que le coffret principal (24) contient une matrice de commutation (25) mécanique, par laquelle les circuits de sécurité (13a-13h) peuvent être connectés entre eux à volonté, de telle façon que, en actionnant l'un des éléments (22a, 22b) de déclenchement de la position d'arrêt de zone (20), on puisse déconnecter des zones ou des groupes de machines prédéfinis.

2. Système d'arrêt de sécurité selon la revendication 1, caractérisé en ce qu'à toutes les machines (12a-12h) de l'installation est attribué au moins un élément (32a-32b), qui déclenche et peut être actionné dans une position d'arrêt du système (30), prioritaire sur la position d'arrêt de zone (20), ledit élément se situant dans une liaison entre l'alimentation électrique (100) et le coffret principal (24) et ayant donc pour effet, lors de son actionnement, de déconnecter de l'alimentation électrique (100) l'ensemble de l'installation de façon centralisée.

3. Système d'arrêt de sécurité selon la revendication 1 ou 2, caractérisé en ce que la matrice de commutation (25) présente une matrice de priorité (25a) et une matrice d'affectation (25b),
la matrice d'affectation (25b) étant composée de conducteurs en lignes et de conducteurs en colonnes (25z1-25z4,25s1-25s4), qui peuvent être reliés en leurs points d'intersection par des interrupteurs mécaniques (27), et,
les conducteurs en lignes et les conducteurs en colonnes pouvant être les uns (25z1-25z4) reliés aux circuits de sécurité (13a-13h) et les autres (25sl-25s4) à des conducteurs (L1-L4) de la matrice de priorité (25a) et être reliés au sein de celle-ci par d'autres interrupteurs mécaniques (SS), entre eux et à un branchement (A) commun du coffret principal (24).

4. Système d'arrêt de sécurité selon la revendication 3, caractérisé en ce que les éléments (22a'-22a'''') de déclenchement de la position d'arrêt de zone (20) se trouvent dans les conducteurs (L1-L4) dans la matrice de priorité (25a) et en ce que les autres interrupteurs mécaniques (SS) sont disposés et constitués de telle sorte que l'extrémité de chaque conducteur suivant dans la matrice de priorité (25a) puisse être reliée au conducteur précédent, au choix avant ou après l'élément de déclenchement (22a'-22a'''') dans le conducteur précédent.

5. Système d'arrêt de sécurité selon la revendication 3, caractérisé en ce que les éléments (22a'-22a'''') de déclenchement de la position d'arrêt de zone (20) se trouvent respectivement montés en série avec au moins un élément de sécurité (23'-23'''') dans les conducteurs (L1-L4) de la matrice de priorité (25a), et en ce que les autres interrupteurs mécaniques (SS) sont disposés et réalisés de telle façon que l'extrémité de chaque conducteur suivant dans la matrice de priorité puisse être relié au conducteur précédent, au choix avant ou après le montage en série entre l'élément (22a'-22a'''') de déclenchement et l'élément de sécurité (23'-23'''') dans le conducteur précédent.

6. Système d'arrêt de sécurité selon la revendication 2, caractérisé par une armoire avec coupe-circuit automatique (80), reliée au coffret principal (24) où la déconnexion centralisée de l'installation de l'alimentation électrique (100) s'effectue, lors d'un arrêt dans la position d'arrêt du système (30).

7. Système d'arrêt de sécurité selon l'une quelconque des revendications 1 à 6, caractérisé en ce que les éléments de commutation (16a-16h) actionnables électriquement dans les circuits d'arrêt des machines (12a-12h) comprennent chacun un relais amorcé en fonctionnement normal par le coffret principal (24) avec une tension, qui arrête la machine lors de l'interruption de cette tension.

8. Système d'arrêt de sécurité selon la revendication 7, caractérisé en ce que les relais (16a-16h) comprennent chacun une combinaison redondante de relais.

9. Système d'arrêt de sécurité selon la revendication 7 ou 8, caractérisé en ce que, dans les circuits de sécurité (13a-13d), un coffret de distribution (18a-18b) est disposé entre le coffret principal (24) et les machines (12a-12d) comme un point nodal d'une zone d'arrêt, ledit coffret répartissant la tension en parallèle entre les relais (16a-16d) placés dans les machines raccordées (12a-12d).

10. Système d'arrêt de sécurité selon l'une quelconque des revendications 1 à 9, caractérisé par un coffret annexe (26) constituant une unité d'extension du coffret principal (24) pour accroître les possibilités de raccordement de zones d'arrêt et par des éléments (22b-32b) pouvant déclencher et être actionnés.

11. Système d'arrêt de sécurité selon l'une quelconque des revendications 1 à 10, caractérisé en ce que les éléments (22a, 22b, 32a, 32b) pouvant déclencher et être actionnés ont respectivement deux contacts de rupteurs à déconnexion forcée, pour l'arrêt sur deux canaux.

12. Système d'arrêt de sécurité selon la revendication 11, caractérisé en ce que les éléments (22a, 22b ,32a, 32b) pouvant être actionnés, sont des boutons-poussoirs ou des interrupteurs.

13. Système d'arrêt de sécurité selon l'une quelconque des revendications 1 à 12, caractérisé en ce que le coffret principal (24) est relié à une unité d'analyse.

14. Système d'arrêt de sécurité selon la revendication 13, caractérisé en ce que l'unité d'analyse est reliée à au moins une unité d'affichage (91, 92).

15. Système d'arrêt de sécurité selon la revendication 6, caractérisé en ce que l'armoire avec coupe-circuit automatique (80) est constituée de telle façon que, si on actionne l'un des éléments (32a, 32b) de déclenchement du système, la déconnexion centralisée de l'alimentation électrique (100) de l'installation s'effectue par une mise hors circuit à deux niveaux, avec une distinction entre les machines à arrêter avec temporisation et celles à arrêter sans temporisation (12a-12h).

16. Système d'arrêt de sécurité selon la revendication 15, caractérisé en ce que l'armoire avec coupe-circuit automatique (80) comporte un contacteur de puissance (K1) pour la déconnexion immédiate des machines à arrêter sans temporisation de l'alimentation électrique et un contacteur de puissance (K2) pour la déconnexion temporisée des machines à arrêter avec temporisation de l'alimentation électrique, les deux contacteurs de puissance (K1, K2) étant reliés au coffret principal (24) par des lignes pilotes (29b, 29c).
